# EUROPÄISCHE PATENTANMELDUNG

(11) **EP 1 693 094 A1**
(43) Veröffentlichungstag der Anmeldung: **23.08.2006**
(21) Anmeldenummer: 05003663.1
(22) Anmeldetag: 21.02.2005
(51) Int. Cl.: B01D 19/02, C02F 1/20

(54) **Kraftschlussbecken zum Ableiten von Brauchwasser in einen Vorfluter**

(71) Anmelder: SIEMENS AKTIENGESELLSCHAFT, 80333 München (DE)
(72) Erfinder: Schäferlein, Hubert, 91315 Höchstadt (DE)

(57) **Zusammenfassung**

Ein Kraftschlussbecken (1) zum Ableiten von Brauchwasser in einen Vorfluter (6), wobei das Kraftschlussbecken (1) einen eine Eintrittsöffnung (13) und eine Austrittsöffnung (15) aufweisenden Fallzylinder (11) und eine durch den Rand der Eintrittsöffnung (13) des Fallzylinders gebildete Überfallschwelle (14) umfasst, zeichnet sich dadurch aus, dass sich die Austrittsöffnung (15) des Fallzylinders (11) unterhalb des Flüssigkeitsspiegels (7) des Vorfluters (6) befindet.

## Beschreibung

Die vorliegende Erfindung betrifft ein Kraftschlussbecken zum Ableiten von Brauchwasser, insbesondere von Kühlwasser einer Kraftwerksanlage, in einen Vorfluter.

Bei mit Frischwasser gekühlten Kraftwerken wird das Brauchwasser aus betrieblichen Gründen über ein Kraftschlussbecken in einen Vorfluter abgeleitet. Unter einem Vorfluter versteht man ein stehendes oder fließendes Gewässer, in welches die Ableitung des Brauchwassers erfolgt. Das Kraftschlussbecken umfasst im Wesentlichen ein Wasserbecken mit einer Schwelle, über die das Brauchwasser in den Vorfluter eingeleitet wird. Nur dann, wenn der Wasserstand die Schwellenhöhe übersteigt, erfolgt ein Abführen von Brauchwasser in den Vorfluter. Die Schwelle kann als lineare Schwelle oder beispielsweise von der Oberkante eines vom Boden des Wasserbeckens in die Höhe stehenden Fallzylinders gebildet sein, wie dies beispielsweise in DE 31 03 306 beschrieben ist. Der in DE 31 03 306 beschrieben Fallzylinder weist außerdem Mittel zum Erhöhen des Lufteintrags in das Brauchwasser auf.

Je nach Kraftwerkstyp beträgt die Durchsatzmenge an Brauchwasser durch ein Kraftschlussbecken in Abhängigkeit von der erlaubten Aufwärmspanne des Brauchwassers etwa 5 bis 10 m³ pro Sekunde. In Abhängigkeit von Schwankungen des Wasserspiegels des Vorfluters fällt das über die Schwelle strömende Brauchwasser etliche Meter in die Tiefe, um sich mit dem Wasser des Vorfluters zu vermischen. Selbst wenn keine Maßnahmen zum Zuführen von Luft in das Brauchwasser vorgesehen sind, kommt es beim Fallen des Wassers in die Tiefe zu einem hohen Lufteintrag, der je nach Wasserqualität zu einer mehr oder weniger starken Schaumbildung führt. Dieser Lufteintrag bzw. die Schaumbildung ist in der Regel sowohl von Behörden als auch von Anrainern unerwünscht.

Während der Inbetriebsetzung eines Kraftschlussbeckens werden daher in der Regel Maßnahmen ausprobiert und getestet, die dazu dienen den Lufteintrag bzw. die Schaumbildung zu verringern. Derartige Maßnahmen können etwa temporäre Abdeckungen, das Einspeisen von Chemikalien oder Entlüftungs- bzw. Rohrsysteme umfassen. Insbesondere letzteres kann enorme Zusatzkosten verursachen.

Außerdem benötigen die Kraftschlussbecken Zum Teil eine vergleichsweise große Baufläche.

Aufgabe der vorliegenden Erfindung ist es daher, ein im Vergleich zum Stand der Technik vorteilhaftes Kraftschlussbecken zur Verfügung zu stellen.

Diese Aufgabe wird durch ein Kraftschlussbecken zum Abführen von Brauchwasser in einen Vorfluter nach Anspruch 1 gelöst. Die abhängigen Ansprüche enthalten vorteilhafte Ausgestaltungen des erfindungsgemäßen Kraftschlussbeckens.

Ein erfindungsgemäßes Kraftschlussbecken zum Ableiten von Brauchwasser in einen Vorfluter umfasst einen Fallzylinder mit einer Eintrittsöffnung und einer Austrittsöffnung, wobei der Rand der Eintrittsöffnung des Fallzylinders eine Überfallschwelle bildet. Im erfindungsgemäßen Kraftschlussbecken befindet sich die Austrittsöffnung des Fallzylinders unterhalb des Flüssigkeitsspiegels des Vorfluters. Das Kraftschlussbecken kann insbesondere als Kraftschlussbecken zum Ableiten von Kühlwasser einer Kraftwerksanlage ausgebildet sein.

Im Vergleich zu Kraftschlussbecken mit linearer Schwelle benötigt das erfindungsgemäße Kraftschlussbecken deutlich weniger bebaute Fläche. Der umbaute Raum kann im Vergleich zu den Kraftschlussbecken mit linearer Schwelle um ca. 35% reduziert werden. Zudem kann in einem derartigen Kraftschlussbecken eine Verringerung des Lufteintrages erreicht werden.

In einer vorteilhaften Ausgestaltung des erfindungsgemäßen Kraftschlussbeckens ist im Inneren des Fallzylinders wenigstens ein Strömungswiderstand angeordnet. Als Strömungswiderstand kann hier insbesondere eine Blende Verwendung finden. Das Vorhandensein des Strömungswiderstandes im Fallzylinder hilft, den Lufteintrag beim Abfluss des Brauchwassers und damit die Schaumbildung zu vermindern. Gute Resultate lassen sich erzielen, wenn im Inneren des Fallzylinders wenigstens ein erster und ein in Strömungsrichtung des Brauchwassers nachgeordneter zweiter Strömungswiderstand vorhanden sind. Beide Strömungswiderstände können als Blenden ausgeführt sein.

Besonders gute Resultate lassen sich erzielen, wenn die Strömungswiderstände als Blenden ausgebildet sind, wobei der Öffnungsquerschnitt der zweiten Blende, d.h. der in Strömungsrichtung nachgeordneten Blende, doppelt so groß ist wie der Öffnungsquerschnitt der ersten Blende.

Eine weitere Möglichkeit, einem Lufteintrag und damit einer Schaumbildung entgegenzuwirken, besteht darin, im Bereich der Eintrittsöffnung des Fallzylinders ein drallbrechendes Element, insbesondere ein Drallkreuz, anzuordnen. Dies gilt in besonderen Maße, wenn zusätzlich wenigstens ein Strömungswiderstand im Fallzylinder vorhanden ist. Dem drallbrechenden Element kommt die Aufgabe zu, einem Drall beim Einströmen des Wassers in den Fallzylinder entgegenzuwirken. Ein Drall führt in der Regel zu Wirbeln im strömenden Wasser, welche zu einem erhöhten Lufteintrag führen. Die Reduktion des Dralls, beispielsweise mittels eines Drallkreuzes, kann die Wirbelbildung und damit den Lufteintrag in das ausströmende Wasser vermindern.

Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.

Fig. 1 zeigt ein erfindungsgemäßes Kraftschlussbecken in einer geschnittenen Seitenansicht.

Fig. 2 zeigt das Kraftschlussbecken aus Fig. 1 in einer geschnittenen Draufsicht.

Fig. 3 zeigt ein erstes Ausführungsbeispiel für eine im Fallzylinder anzuordnende Blende.

Fig. 4 zeigt ein zweites Ausführungsbeispiel für eine im Fallzylinder anzuordnende Blende.

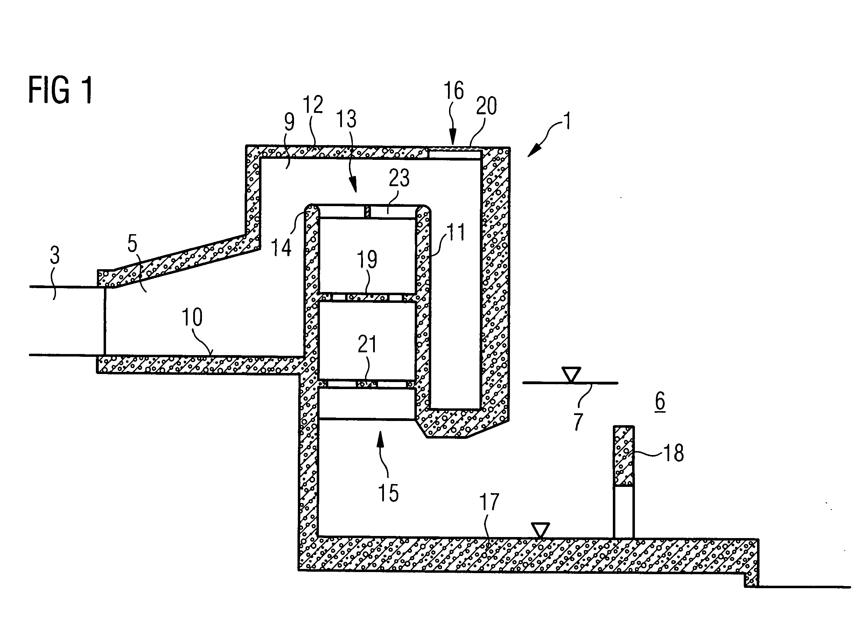

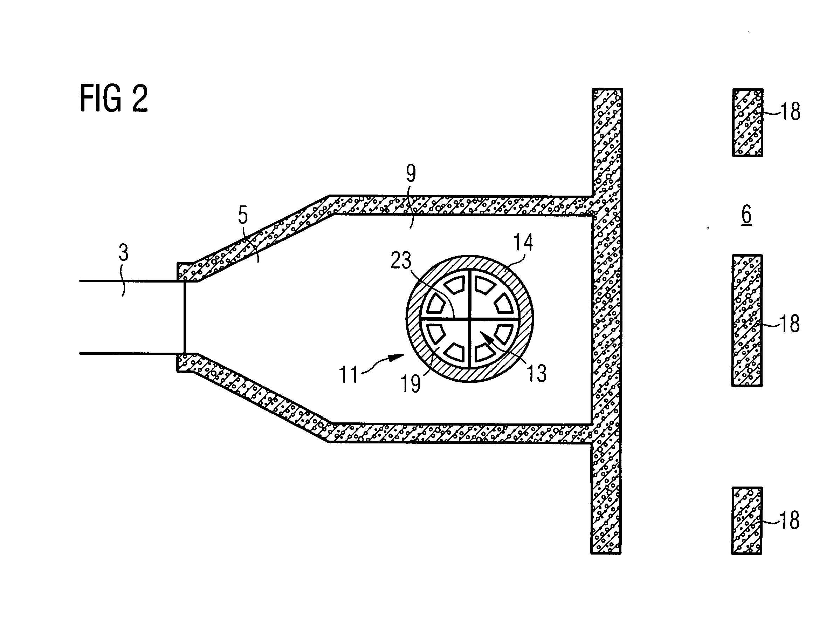

Ein erfindungsgemäßes Kraftschlussbecken 1 ist in den Figuren 1 und 2 dargestellt. Figur 1 zeigt das Kraftschlussbecken 1 in einem vertikalen Schnitt, während Figur 2 das Kraftschlussbecken 1 in einem horizontalen Schnitt in Draufsicht zeigt.

Das Kraftschlussbecken 1 ist an eine Zulaufleitung 3 angeschlossen, durch die dem Kraftschlussbecken 1 Brauchwasser, beispielsweise Kühlwasser einer Kraftwerksanlage, zuströmt. Das Kraftschlussbecken 1 steht außerdem strömungstechnisch mit einem Vorfluter im Kontakt, dessen Wasserstand durch die Linie 7 angedeutet ist und in den das Brauchwasser eingeleitet wird.

Das Kraftschlussbecken 1 umfasst eine Aufweitungskammer 5, ein Wasserbecken 9, das mit einer Abdeckplatte 12 abgedeckt ist, und einen Fallzylinder 11, dessen Einlauföffnung 13 mit Abstand über dem Boden 10 des Wasserbeckens 9 angeordnet ist. Die Auslauföffnung 15 des Fallzylinders 11 befindet sich unterhalb der Wasserstandslinie 7 des Vorfluters. Mit Abstand zur Auslauföffnung 15 ist eine Bodenplatte 17 vorhanden, von der aus mehrere Prallplatten 18 in die Höhe stehen. Die Austrittsgeschwindigkeit des Brauchwassers in den Vorfluter beträgt hinter den Prallplatten 18 weniger als 0,3 m/s.

Um einen Einstig zur Inspektion zu ermöglichen, ist in der Abdeckplatte 12 eine Einstiegsöffnung 16 vorhanden. Die Einstiegsöffnung 16 ist mit einem Abdeckgitter 20 verschlossen, das eine Belüftung des Wasserbeckens 9 nicht behindert und so dem Entstehen eines Unterdrucks im Wasserbecken 9 entgegenwirkt.

Der obere Rand des Fallzylinders 11, also die Begrenzung der Einlauföffnung 13, bildet eine Überfallschwelle 14 für das im Wasserbecken 9 befindliche Brauchwasser. Über diese Überfallschwelle 14 strömt das Brauchwasser in den Fallzylinder 11. Im Inneren des Fallzylinders 11 sind zwei Blenden 19 und 21 angeordnet, die als Strömungswiderstände für das durch den Fallzylinder 11 strömende Brauchwasser dienen. Die Blenden 19, 21 sind in verschiedenen Höhen angeordnet, wobei die untere Blende 21, also die in Strömungsrichtung des Brauchwassers nachgeordnete Blende, gegenüber der Blende 19 einen größeren Öffnungsquerschnitt aufweist. Der Öffnungsquerschnitt der Blende 19 ist etwa nur halb so groß wie der Öffnungsquerschnitt der Blende 21.

In der Einlauföffnung ist zudem ein Drallkreuz 23 angeordnet, welches die Ausbildung eines Wirbels im durch den Fallzylinder 11 strömenden Brauchwasser verhindern soll.

Die beiden Blenden 19 und 21 bilden Strömungswiderstände, die zu einem Wasserstau führen, welcher die Strömungsgeschwindigkeit des Brauchwassers im Fallzylinder 11 derart herabsetzt, dass die sogenannte charakteristische Separationsgeschwindigkeit erreicht oder unterschritten wird. Bei einer Strömungsgeschwindigkeit die kleiner oder gleich der charakteristischen Separationsgeschwindigkeit ist, können sich die Luftblasen und das Wasser entmischen, sodass die Luftblasen im Fallzylinder 11 aufsteigen und die Wasseroberfläche erreichen können. Im Bereich der Auslauföffnung 15 ist daher der Luftgehalt des Brauchwassers im Vergleich zu einem Fallzylinder ohne Blenden vermindert.

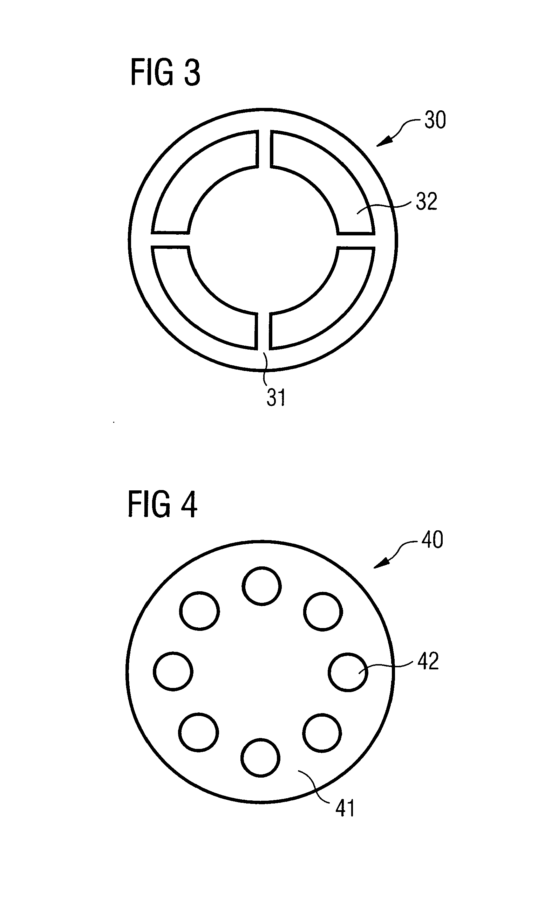

Mögliche Blendenformen sind in den Figuren 3 und 4 dargestellt. Figur 3 zeigt eine Blende 30, die beispielsweise aus einer runden Metallscheibe als Blendenkörper 31 hergestellt ist. Der Blendenkörper 31 ist in seinem äußeren Umfangsbereich mit vier schlitzförmigen, entlang seines Umfangs verlaufenden Blendenöffnungen 32 ausgestattet, die gleichmäßig über den Umfang des Blendenkörpers 31 verteilt sind.

In der in Figur 4 dargestellten zweiten Variante einer Blende 40 weist der Blendenkörper 41 statt schlitzförmiger Blendenöffnungen kreisförmige Blendenöffnungen 42 auf, die über dem Umfang des Blendenkörpers 41 gleichmäßig verteilt sind.

Weitere Formen der Blendenöffnungen sind denkbar. Durch Wahl geeigneter Dimensionen und Formen der Blendeöffnungen kann der Lufteintrag in das durch den Fallzylinder fallende Brauchwasser minimiert werden. Das Optimieren der Formen und Dimensionen der Blendeöffnungen kann empirisch erfolgen.

## Patentansprüche

1. Kraftschlussbecken (1) zum Ableiten von Brauchwasser in einen Vorfluter (6), wobei das Kraftschlussbecken (1) einen eine Eintrittsöffnung (13) und eine Austrittsöffnung (15) aufweisenden Fallzylinder (11) und eine durch den Rand der Eintrittsöffnung (13) des Fallzylinders gebildete Überfallschwelle (14) umfasst, **dadurch gekennzeich- net** , dass sich die Austrittsöffnung (15) des Fallzylinders (11) unterhalb des Flüssigkeitsspiegels (7) des Vorfluters (6) befindet.

2. Kraftschlussbecken (1) nach Anspruch 1, **dadurch gekennzeichnet, dass** im Inneren des Fallzylinders (11) wenigstens ein Strömungswiderstand (19, 21) angeordnet ist.

3. Kraftschlussbecken (1) nach Anspruch 2, **dadurch gekennzeichnet, dass** der Strömungswiderstand (19, 21) als Blende ausgeführt ist.

4. Kraftschlussbecken (1) nach Anspruch 2 oder 3, **dadurch gekennzeichnet, dass** im Inneren des Fallzylinders (11) wenigstens ein erster (19) und ein in Strömungsrichtung des Brauchwassers nachgeordneter zweiter Strömungswiderstand (21) vorhanden sind.

5. Kraftschlussbecken (1) nach Anspruch 4, **dadurch gekennzeichnet, dass** der erste und der zweite Strömungswiderstand als erste (19) und zweite Blende (21) ausgeführt sind, wobei die in Strömungsrichtung nachgeordnete zweite Blende (21) einen größeren Öffnungsquerschnitt als die erste Blende (19) aufweist.

6. Kraftschlussbecken (1) nach Anspruch 5, **dadurch gekennzeichnet, dass** der Öffnungsquerschnitt der zweiten Blende (21) doppelt so groß ist wie der Öffnungsquerschnitt der ersten Blende (19).

7. Kraftschlussbecken (1) nach einem der vorangehenden Ansprüche, **dadurch gekennzeichnet, dass** im Bereich der Eintrittsöffnung (13) des Fallzylinders (11) ein drallbrechendes Element (23) angeordnet ist.

8. Kraftschlussbecken (1)nach Anspruch 7, **dadurch gekennzeichnet, dass** das drallbrechende Element als Drallkreuz (23) ausgeführt ist.
